# FASCICULE DE BREVET EUROPEEN

(11) **EP 0 465 981 B1**
(45) Date de publication et mention de la délivrance du brevet: **25.10.1995**
(21) Numéro de dépôt: 91110890.0
(22) Date de dépôt: 01.07.1991
(51) Int. Cl.: B29B 7/24, A21C 5/04, G01F 11/02

(54) **Dispositif doseur de produits en grains ou pulvérulents et procédé de mélangeage de caoutchouc crus utilisant ce dispositif**
Dosiervorrichtung für körnige oder pulverförmige Produkte und Rohkautschuk-Mischungsverfahren unter deren Verwendung
Dosing device for granular or powdered products and mixing method of raw rubber using the same

(30) Priorité: 12.07.1990 FR 9009012
(43) Date de publication de la demande: 15.01.1992
(73) Titulaire: SEDEPRO, F-75015 Paris (FR)
(72) Inventeur: Deal, Michel, F-03110 St Remy En Rollat (FR)
(74) Mandataire: Bauvir, Jacques

(56) Documents cités:
- EP-A- 0 015 855
- EP-A- 0 368 026
- DE-A- 2 757 005
- DE-A- 3 509 294
- FR-A- 2 423 757

## Description

La présente invention se rapporte au dosage quantitatif de produits en grains ou pulvérulents.

Le dosage de produits, en poids ou en volume, comporte d'innombrables applications en milieu industriel. Dans certains cas, il est hautement souhaitable que la mesure de poids ou de volume puisse se faire en continu. Si le dosage quantitatif en continu est parfaitement maîtrisé pour des produits en phase liquide, il n'en va pas de même pour les produits se présentant sous forme de poudres ou même de grains. On connaît déjà de nombreux systèmes de dosage quantitatif fonctionnant notamment par pesées. Cependant, toutes les techniques de dosage connues font appel à des asservissements, à une instrumentation complexe, à des moyens de calculs annexes, rendant ces sytèmes complexes, encombrants, coûteux, et/ou peu fiables en milieu industriel, ou mal adaptés à fonctionner à des cadences variables. En outre, les systèmes volumétriques soulèvent des difficultés au niveau du remplissage et de l'évacuation du volume élémentaire de dosage, ou ne se prêtent pas à fonctionner à des cadences élevées.

Les demandes de brevet FR-A-2 423 757 et EP-A-0 015 855 présentent des dipositifs de dosage volumétrique de pâte à pain. Ces dipositifs comportent une trémie étanche de stockage sous pression de la pâte qui communique avec un distributeur rotatif constitué par un rotor tournant dans un carter cylindrique fixe et entraîné par un moto-réducteur, ledit carter comportant une ouverture pour l'évacuation des pâtons. Plus particulièrement, ledit rotor tournant comporte un cylindre dans lequel coulisse au moins un piston balayant une cylindrée donnée. En fonctionnement, ledit rotor tournant se déplace dans ledit carter fixe entre une position d'admission dans laquelle les produits pâteux à doser remplissent la cylindrée, et une position de refoulement, différente de la position d'admission, dans laquelle les produits pâteux sont évacués de ladite cylidnrée, ledit piston étant raclé par ledit carter lorsqu'il quitte la position de refoulement.

La présente invention propose un dispositif simple, fiable et très précis de dosage quantitatif de produits en grains ou pulvérulents.

Le but de la présente invention est de proposer un dispositif doseur volumétrique qui se prête à un fonctionnement continu, donc avec un volume élémentaire très faible par rapport aux quantités à doser, afin de pouvoir fonctionner de façon continue, éventuellement à des cadences élevées.

Un autre but de la présente invention est de proposer un tel dispositif de dosage qui puisse refouler les produits dosés sous une pression éventuellement élevée, afin d'être compatible avec une très large gamme d'applications.

Selon l'invention, le dispositif doseur pour produits en grains ou pulvérulents comporte au moins un piston balayant une cylindrée donnée, coulissant dans un cylindre réalisé dans un corps mobile se déplaçant dans un carter entre une position d'admission dans laquelle les produits à doser remplissent ladite cylindrée, et une position de refoulement différente de la position d'admission, dans laquelle les produits à doser sont évacués de ladite cylindrée, ledit piston étant raclé par ledit carter lorsqu'il quitte la position de refoulement, et comporte un organe de gavage des produits, comportant des moyens de brassage, emplissant le cylindre à la position d'admission, agissant de façon à effectuer un compactage toujours identique, quelles que soient les conditions d'incorporation des produits à doser.

L'organe de gavage provoque un brassage du produit afin d'éviter que celui-ci ne s'immobilise, notamment par l'effet de voûte.

Les figures suivantes illustrent une application du dispositif de l'invention au dosage de produits intervenant dans les industries de transformation du caoutchouc, notamment le noir de carbone et le soufre.
La figure 1 est un schéma global du dispositif ;

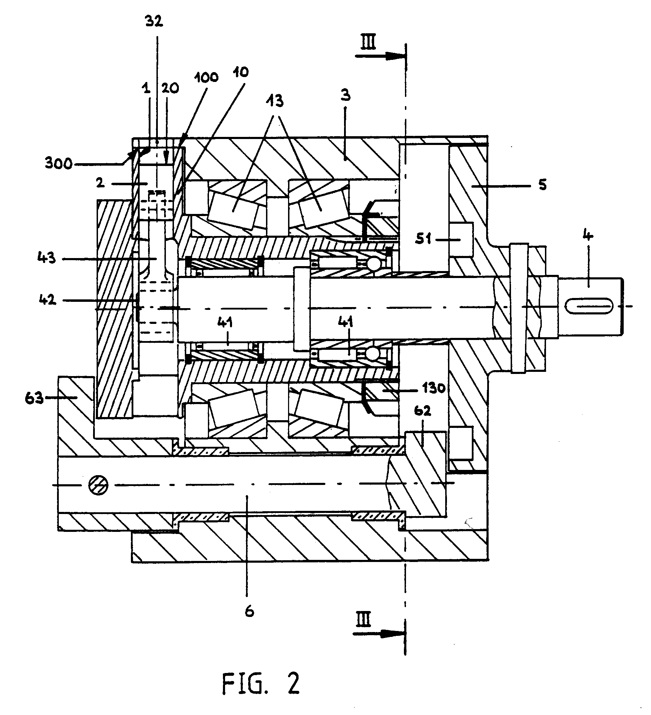

La figure 2 est une coupe illustrant plus particulièrement la commande des mouvements ;
La figure 3 est une coupe selon III-III à la figure 2 ;
La figure 4 montre un détail de réalisation et fait apparaître le plan de la coupe montrée en figure 2.
La figure 5 montre un organe de la machine.
Les figures 6, 7 et 8 illustrent différentes variantes du cycle de fonctionnement.
Les figures 9, 10 et 11 montrent un détail de réalisation correspondant au cycle de la figure 8.

L'élément doseur proprement dit est un cylindre 1 dans lequel coulisse un piston 2. La course du piston 2 définit une cylindrée donnée qui constitue la quantité minimale de matière que l'on puisse doser. Le cylindre 1 est aménagé dans un corps mobile dans un carter 3. Le corps peut passer d'une position d'admission à une position de refoulement.

A l'admission, le piston 2 est en regard de l'orifice d'alimentation 31 percé au travers du carter 3, et passe du point mort haut au point mort bas pour remplir la cylindrée par le produit pulvérulent ou le produit en grains à doser, que l'on désignera en toute généralité par "matière" dans la suite de la description. Lorsque la cylindrée est totalement remplie, l'ensemble constitué par le cylindre 1 et le piston 2 se déplace vers la position de refoulement, ce qui a pour effet d'occulter le cylindre 1 et de définir ainsi le volume élémentaire dosé, correspondant à la cylindrée du dispositif.

Le cylindre 1 étant parvenu en regard de l'orifice de refoulement 32 percé lui aussi au travers du carter 3, le piston 2 passe du point mort bas vers le point mort haut, ce qui éjecte la matière hors du cylindre 1. Lorsque celui-ci est totalement vide, l'ensemble cylindre 1 et piston 2 se déplace vers la position d'admission. Afin d'être certain qu'il ne reste pas de matière dans le cylindre 1, lorsque celui-ci quitte la position de refoulement, le piston 2 est raclé par le carter. Le cylindre se trouve donc isolé de la matière dosée et aucun mouvement de reflux de celle-ci n'est possible.

Ce principe de fonctionnement étant exposé, on va maintenant décrire plus en détails le dispositif doseur de l'invention.

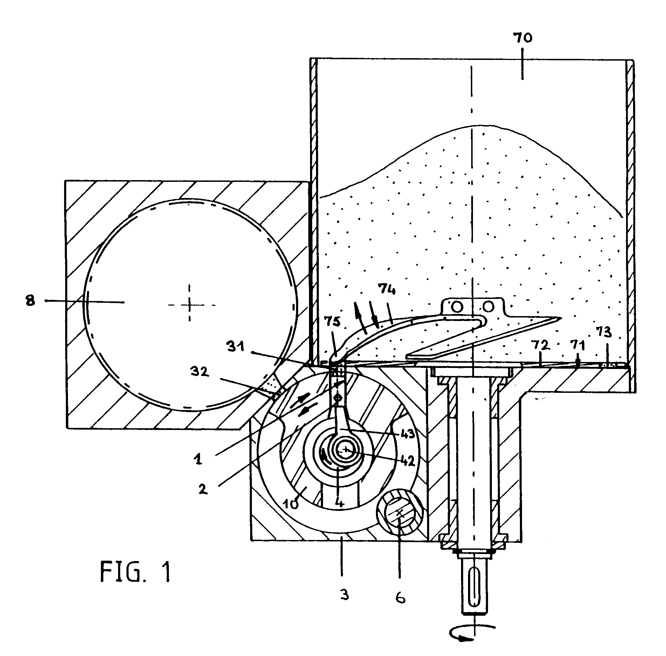

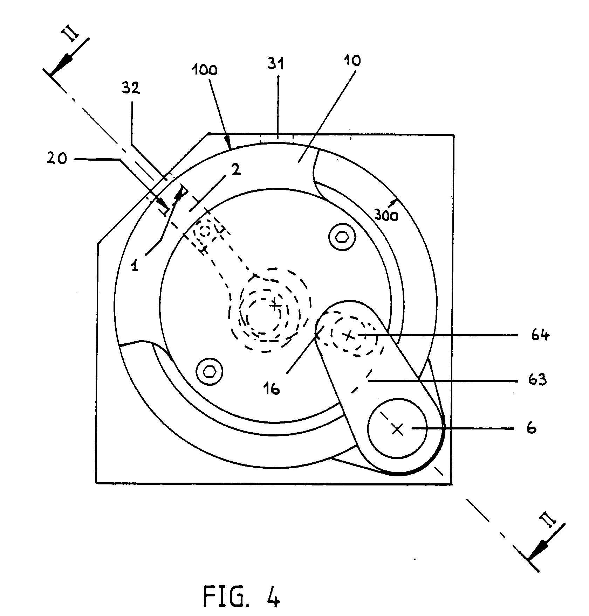

On remarque que le mouvement entre l'admission, position illustrée par la figure 1, et le refoulement, position apparaissant à la figure 4, est un arc de cercle. Le cylindre 1 est donc réalisé dans un corps mobile qui est oscillant 10, lui-même disposé dans un carter 3 qui englobe l'ensemble des organes effectuant le dosage. Une surface cylindrique 300 intérieure est usinée dans le carter 3. Le corps oscillant 10 comporte une surface cylindrique 100 extérieure. Le corps oscillant 10 est monté dans le carter 3 de façon à obtenir un jeu fonctionnel très faible entre ces deux pièces au niveau des surfaces 100 et 300. Ce jeu faible doit garantir l'étanchéité du dispositif et son bon fonctionnement. A cette fin, le corps oscillant 10 est monté à l'intérieur du carter 3 sur deux roulements 13 à rouleaux, à pistes coniques, (ou d'autres types de roulements préchargés) serrés par la bague 130, ce qui permet une rotation sans jeu radial dû aux roulements, et sans basculement du corps oscillant 10 à l'intérieur du carter 3.

La surface cylindrique 300 est percée de deux orifices aménagés au travers du carter 3 : l'orifice d'alimentation 31 et l'orifice de refoulement 32. Lorsque le piston 2 est au point mort haut dans le corps oscillant 10, la face supérieure 20 dudit piston 2 affleure la surface 100 du corps oscillant 10. Cette face supérieure 20 est donc elle-même cylindrique pour assurer la continuité parfaite de la surface cylindrique 100, et donc l'étanchéité lorsque le piston 2 quitte la position de refoulement pour disparaître sous le carter 3. Cette disposition est très importante et garantit que la cylindrée est totalement vide au début du cycle suivant, ce qui est indispensable pour atteindre une précision élevée. Elle permet de réaliser l'effet de raclage du piston par le carter, comme évoqué ci-dessus.

Le mouvement alternatif du piston 2 entre son point mort haut et son point mort bas est communiqué par un arbre d'entrée 4 disposé à l'intérieur du corps oscillant 10, et concentriquement par rapport au mouvement du corps oscillant 10 dans le carter 3. L'arbre d'entrée 4 est porté par des paliers 41, et comporte à son extrémité un maneton 42 excentré de la moitié de la course du piston 2. Le maneton 42 agit sur une bielle 43 reliée au piston 2.

Le mouvement d'oscillation du corps oscillant 10 doit bien entendu être coordonné par rapport au mouvement alternatif du piston 2. Il est commandé par une came à double effet 5 calée sur ledit arbre d'entrée 4. Le chemin de guidage 51 comporte deux tronçons en arc de cercle, l'un de petit rayon correspondant à la position d'admission, l'autre de grand rayon correspondant à la position de refoulement, et, entre lesdits tronçons, des portions de raccordement commandant le mouvement d'oscillation du corps oscillant 10.

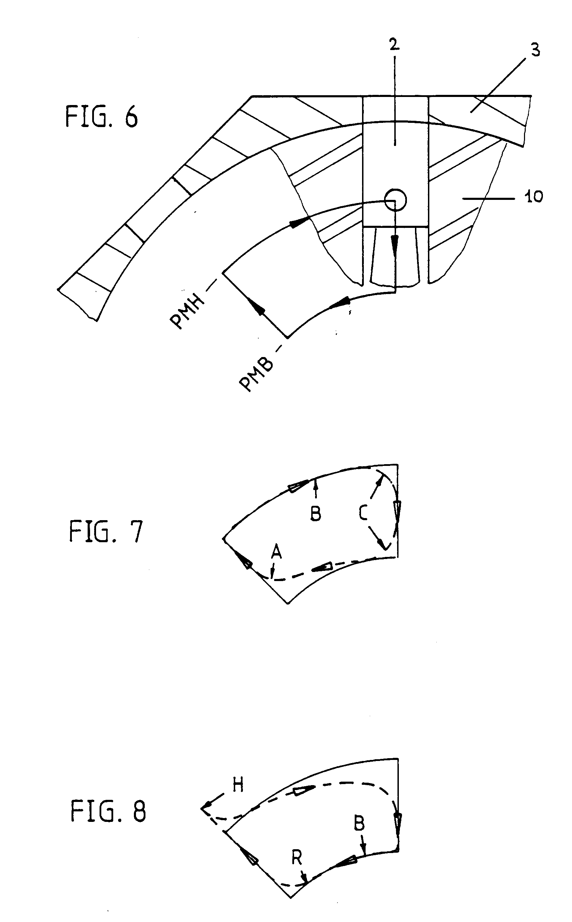

La figure 6 schématise le cycle théorique du dispositif doseur. Il est important que le piston 2 soit au point mort haut avant le début du mouvement du corps oscillant 10 vers l'admission, et y reste au moins jusqu'à ce qu'il ne soit plus en contact avec l'orifice de refoulement 32. Dès lors, les mouvements du piston dans le corps oscillant, et du corps oscillant par rapport au carter, doivent être commandés par des moyens qui, globalement, assurent l'immobilité du piston dans le corps oscillant au moins pendant que le corps oscillant quitte la position de refoulement, le piston étant à ce moment à son point mort haut. Il est également important que le piston 2 soit au point mort bas bien avant que la cylindrée ne soit totalement isolée de l'orifice d'admission 31 par le mouvement du corps oscillant 10 vers le refoulement. Par ailleurs, pour adoucir le fonctionnement du dispositif, on peut tolérer certains écarts par rapport aux mouvements théoriques expliqués auparavant. La figure 7 schématise un cycle réel convenant pour une matière compressible : le cycle comporte des arrondis propices au fonctionnement à une cadence très élevée. Par exemple, le mouvement du piston 2 vers le point mort haut peut débuter légèrement avant que la cylindrée ne soit en contact avec l'orifice de refoulement 32, lorsque la nature du matériau dosé lui permet de supporter une légère compression. Cela permet de dessiner des pentes moins raides dans le chemin de roulement 51 : la portion A de la courbe s'écarte ainsi assez nettement du cycle théorique. Pendant la portion B, l'arbre 4 tourne à la même vitesse angulaire que le corps oscillant 10 : le piston 2 reste immobile dans le corps oscillant 10. Les arrondis en C adoucissent le mouvement, sans préjudice pour la précision du dispositif doseur.

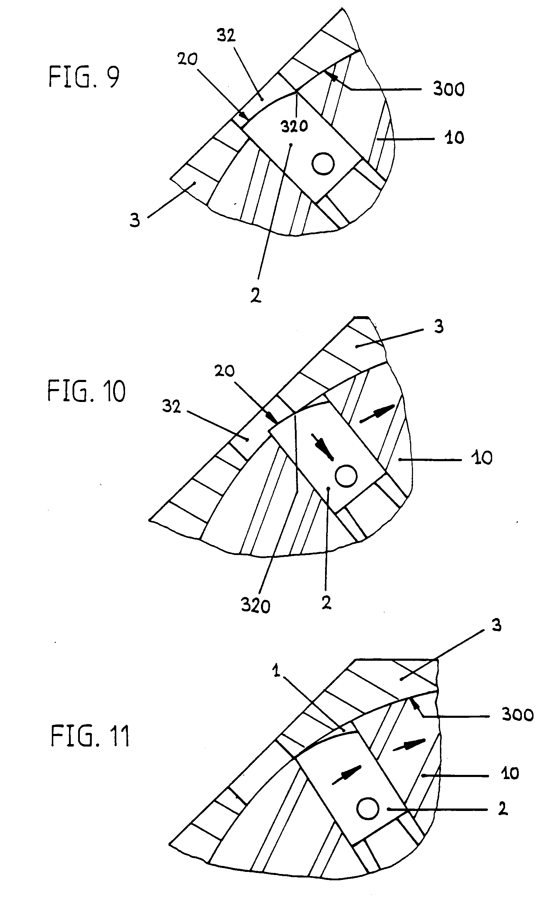

La figure 8 montre un cycle réel convenant à une matière incompressible. Pendant la portion B du cycle, l'arbre 4 tourne à la même vitesse angulaire que le corps oscillant 10. Au point R, l'orifice de refoulement est au moins partiellement en communication avec la matière contenue dans le cylindre 1 : le piston 2 peut débuter son mouvement de refoulement, qui se poursuit jusqu'en H, position dans laquelle le piston 2 pénètre dans l'orifice de refoulement 32. Sa face supérieure 20 dépasse donc le niveau correspondant à la surface cylindrique 300 du carter 3 : le piston sort du corps oscillant 10 pour favoriser le refoulement de la matière dosée par exemple pour favoriser son incorporation dans une autre matière. La face supérieure 20 du piston 2 a elle-même une forme adéquate pour que compte tenu du mouvement relatif du piston 2 par rapport au carter 3, elle soit raclée par l'arête 320 du carter 3, comme le fait bien comprendre la figure 10. Lorsque le cylindre 1 est totalement occulté par la surface cylindrique 300 (figure 11), le piston 2 peut ou non être immobile par rapport au corps oscillant. Le schéma de la figure 8 correspond au cas où le piston continue à descendre dans le cylindre 1.

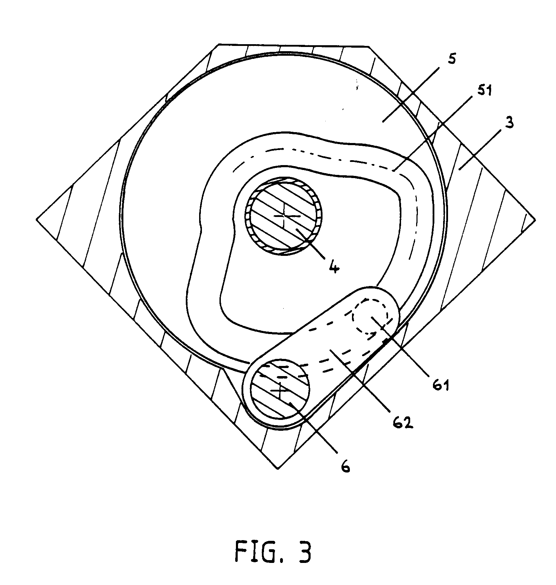

Le chemin de roulement 51 (voir figure 3) reçoit un galet 61 porté par un bras 62 articulé sur le carter 3. Le bras 62 est lié à un arbre de renvoi 6, monté dans le carter 3 pour transmettre le mouvement d'oscillation du bras 62 à un second bras 63. Le second bras 63 porte un second galet 64 qui est engagé dans une rainure 16 réalisée sur le corps oscillant.

Ainsi, l'arbre d'entrée 4 imprime tous les mouvements voulus par deux chaînes cinématiques : l'une comportant un système bielle-manivelle (bielle 43 et maneton excentré 42) pour commander le mouvement alternatif du piston 2, et l'autre comportant un système à came à double effet 5, et arbre de renvoi 6 pour commander l'oscillation du corps oscillant 3. Il est important d'observer que, puisque la came à double effet 5 agit sur la position du corps oscillant 10 par rapport à l'arbre d'entrée 4, elle agit sur la position du cylindre 1 par rapport au maneton 42 et donc sur la position du piston 2 lui-même dans le cylindre 1. Ces deux chaînes cinématiques agissant l'une sur l'autre, il est possible de dessiner un dispositif dont le mouvement comporte quatre temps bien séparés : tout d'abord un mouvement de descente pure du piston 2 dans son cylindre 1 pendant l'admission, puis un mouvement de basculement du corps oscillant de la position d'admission à la position de refoulement, le piston 2 restant immobile dans le cylindre 1, puis un mouvement de remontée du piston 2 dans le corps oscillant 10, celui-ci restant immobile dans le carter 3, et enfin un retour vers la position d'admission sans mouvement du piston 2 dans le corps oscillant 3. Mais en pratique, les mouvements, au moins dans certaines phases comme détaillé ci-dessus, peuvent se chevaucher légèrement sans aucun préjudice pour la précision du dispositif.

L'alimentation du cylindre 1 en matière à doser peut se faire simplement par gravité, en disposant le cylindre substantiellement verticalement en position d'admission, et en fixant un entonnoir au dessus de l'orifice d'admission 31. Cependant, pour certaines matières pulvérulentes, dont le noir de carbone ou le soufre, cela peut ne pas être suffisant pour assurer un fonctionnement avec une précision élevée. On prévoit de préférence un organe de gavage emplissant le cylindre 1 à la position d'alimentation.

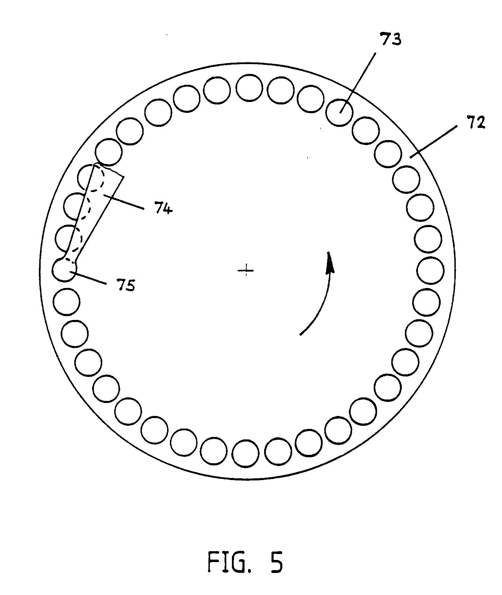

On voit à la figure 1 que cet organe de gavage est constitué essentiellement par un réservoir 70 alimentant le cylindre 1 par gravité, ledit réservoir ayant un fond 71 circulaire au bord duquel apparaît ledit orifice d'alimentation 31. Des moyens de brassage sont disposés au moins à proximité dudit fond 71 de façon à entraîner la matière vers l'orifice d'alimentation. En consultant les figures 1 et 5, on voit que les moyens de brassage sont constitués par un disque 72 percé de trous 73 de diamètre correspondant à celui du cylindre 1, disposés sur un cercle à un rayon tel qu'ils passent tous successivement en regard de l'orifice d'alimentation, et par une lame flexible 74, montée fixe dans le réservoir, pourvue d'une tête 75 disposée en regard de l'orifice d'admission 31 de façon à refouler la matière disposée dans lesdits trous 73 lorsque chacun de ceux-ci passe devant l'orifice d'admission 31. Cette tête 75 appuie avec une force constante en direction du cylindre 1, ce qui contribue aussi à assurer une grande précision et une grande reproductibilité ou fonctionnement du dispositif doseur, en effectuant dans le cylindre 1 un compactage toujours identique, quelles que soient les conditions d'incorporation des produits à doser dans le réservoir 70.

L'organe de gavage réalise un conditionnement de la matière. Il participe également à la précision du dispositif doseur. On a constaté qu'il est souhaitable que la vitesse de rotation du disque 72 soit proportionnelle à la vitesse de rotation de l'arbre d'entrée 4. Grâce à cela, le dosage de matières comme le soufre ou le noir de carbone, très sensibles aux conditions atmosphériques prévalant lors du stokage, est très reproductible et indépendant des conditions initiales sous lesquelles la matière est introduite dans le réservoir 70.

Pour éviter tout blocage dans le réservoir 70, qui pourrait survenir avec certaines matières par effet de voûte, on peut bien entendu ajouter des agitateurs (non représentés) à l'intérieur du réservoir 70.

Il faut noter que, en général, on souhaite doser un poids donné de matière, par exemple on souhaite incorporer un poids déterminé de noir de carbone à un poids déterminé de caoutchouc. Il suffit de procéder à un étalonnage pour chaque type de matière à doser, on a constaté que l'on accède ainsi à une mesure de poids par le biais d'une mesure de volume de façon reproductible.

Le dispositif doseur permet de disposer, juste en aval de l'orifice de refoulement une enceinte 8 d'incorporation et de mélangeage, même si la matière doit être refoulée sous pression, éventuellement élevée, ce qui permet d'envisager une très large gamme d'applications.

Une application de l'invention concerne un procédé de mélangeage en continu de caoutchouc. L'état de la technique connaît déjà un procédé de mélangeage en continu de caoutchouc correspondant au préambule de la revendication 10 par le brevet FR 1 284 249.

Par exemple, le dispositif peut être utilisé pour introduire dans l'enceinte 8 des produits pulvérulents intervenant dans la réalisation d'un mélange de caoutchouc, le mélangeage étant effectué en continu dans l'enceinte 8. Le procédé de mélangeage du caoutchouc cru consiste à introduire en continu un élastomère dans une enceinte 8 de mélangeage, et à incorporer en continu dans ladite enceinte des produits pulvérulents exactement dosés, et est caractérisé en ce que le dosage desdits produits pulvérulents est effectué par au moins un piston 2 balayant une cylindrée donnée, coulissant dans un cylindre 1 réalisé dans un corps mobile se déplaçant dans un carter 3 entre une position d'admission dans laquelle les produits à doser remplissent ladite cylindrée, et une position de refoulement, différente de la position d'admission, dans laquelle les produits à doser sont évacués de ladite cylindrée, ledit piston 2 étant raclé par ledit carter 3 lorsqu'il quitte la position de refoulement.

## Revendications

1. Dispositif doseur de produits en grains ou pulvérulents, comportant au moins un piston (2) balayant une cylindrée donnée, coulissant dans un cylindre (1) réalisé dans un corps mobile (10) se déplaçant dans un carter (3) entre une position d'admission dans laquelle les produits à doser remplissent ladite cylindrée, et une position de refoulement, différente de la position d'admission, dans laquelle les produits à doser sont évacués de ladite cylindrée, ledit piston (2) étant raclé par ledit carter (3) lorsqu'il quitte la position de refoulement, comportant un organe de gavage des produits emplissant le cylindre (1) à la position d'admission, ledit organe de gavage comportant des moyens de brassage agissant de façon à effectuer un compactage toujours identique, quelles que soient les conditions d'incorporation des produits à doser.

2. Dispositif selon la revendication 1 caractérisé en ce que les mouvements du piston et du corps mobile sont commandés par un arbre d'entrée (4) et par deux chaînes cinématiques, l'une comportant un système bielle-manivelle pour commander le mouvement alternatif de piston (2), l'autre comportant un système à came à double effet pour commander le mouvement du corps mobile (10), les deux chaînes cinématiques agissant l'une sur l'autre.

3. Dispositif doseur selon la revendication 1 ou 2, caractérisé en ce que :
a) ledit corps (10) est oscillant, monté rotatif à l'intérieur dudit carter (3), le cylindre (1) décrivant un arc de cercle entre la position d'admission et la position de refoulement,
b) un arbre d'entrée (4) est disposé concentriquement par rapport au mouvement du corps oscillant (10) dans le carter (3),
c) le mouvement alternatif du piston (2) est commandé par l'arbre (4) d'entrée au moyen d'un système bielle-manivelle,
d) le mouvement du corps oscillant (10) est commandé par des moyens coordonnant le mouvement du piston (2) par rapport au corps oscillant (10).

4. Dispositif selon la revendication 3, caractérisé en ce que lesdits moyens assurent l'immobilité du piston (2) par rapport au corps oscillant (10) au moins pendant que le corps oscillant (10) quitte la position de refoulement.

5. Dispositif selon la revendication 3 ou 4, caractérisé en ce que lesdits moyens sont constitués par une came à double effet (5) disposée sur l'arbre d'entrée (4) et un arbre de renvoi (6) articulé sur le carter (3), commandant le mouvement du corps oscillant.

6. Dispositif doseur selon la revendication 3 ou 5, caractérisé en ce que le piston (2) sort du corps oscillant (10) en position de refoulement, et en ce que la face supérieure (20) du piston (2) a une forme adéquate pour que, compte tenu du mouvement relatif du piston (2), par rapport au carter (3), elle soit raclée par l'arête (320) du carter (3).

7. Dispositif doseur selon l'une des revendication 1 à 6, caractérisé en ce que l'organe de gavage est constitué essentiellement par un réservoir (70) alimentant le cylindre (1) par gravité, ledit réservoir ayant un fond (71) circulaire sous lequel apparaît un orifice d'alimentation (31) du cylindre (1) et étant pourvu desdits moyens de brassage disposés au moins à proximité du fond (71).

8. Dispositif doseur selon la revendication 7, caractérisé en ce que les moyens de brassage sont constitués par un disque (72) percé de trous (73) de diamètre correspondant à celui du cylindre (1), disposés sur un cercle à un rayon tel qu'ils passent tous successivement en regard de l'orifice d'alimentation (31), et par une lame flexible (74), montée fixe dans le réservoir (70), pourvue d'une tête (75) disposée en regard de l'orifice d'admission (31) de façon à refouler la matière disposée dans lesdits trous (73) lorsque chacun de ceux-ci passe devant l'orifice d'admission (31).

9. Dispositif doseur selon la revendication 8, caractérisé en ce que ladite tête (75) appuie avec une force constante en direction du cylindre (1).

10. Procédé de mélangeage en continu de caoutchouc cru, consistant à introduire en continu un élastomère dans une enceinte (8) de mélangeage, et à incorporer en continu dans ladite enceinte (8) des produits pulvérulents exactement dosés, caractérisé en ce que le dosage des produits pulvérulents est effectué par au moins un piston (2) balayant une cylindrée donnée, coulissant dans un cylindre (1) réalisé dans un corps mobile se déplaçant dans un carter (3) entre une position d'admission dans laquelle les produits à doser remplissent ladite cylindrée, et une position de refoulement, différente de la position d'admission, dans laquelle les produits à doser sont évacués de ladite cylindrée, ledit piston (2) étant raclé par ledit carter (3) lorsqu'il quitte la position de refoulement.

## Claims

1. A metering device for granular or powdered products, comprising at least one piston (2) sweeping a given swept volume which slides within a cylinder (1) formed in a moveable body (10) moving within a housing (3) between an admission position in which the products to be metered fill said swept volume and a delivery position, which is different from the admission position and in which the products to be metered are evacuated from said swept volume, said piston (2) being scraped by said housing (3) when it leaves the delivery position, comprising a member for force-feeding the products, filling the cylinder (1) in the admission position, said force-feeding member comprising stirring means acting so as to effect compacting which is always identical, whatever the conditions of incorporation of the products to be metered.

2. A device according to Claim 1, characterised in that the movements of the piston and the moveable body are controlled by an input shaft (4) and by two kinematic chains, one comprising a connecting-rod/crank system for controlling the reciprocating movement of the piston (2), the other comprising a double-acting cam system for controlling the movement of the moveable body (10), the two kinematic chains acting one on the other.

3. A metering device according to Claim 1 or 2, characterised in that:
(a) said body (10) is oscillating, mounted for rotation within said housing (3), the cylinder (1) describing a circular arc between the admission and delivery positions,
(b) an input shaft (4) is arranged concentrically with respect to the movement of the oscillating body (10) in the housing (3),
(c) the reciprocating movement of the piston (2) is controlled by the input shaft (4) by means of a connecting rod/crank system,
(d) the movement of the oscillating body (10) is controlled by means which coordinate the movement of the piston (2) with respect to the oscillating body (10).

4. A device according to Claim 3, characterised in that said means ensure the immobility of the piston (2) with respect to the oscillating body (10) at least while the oscillating body (10) leaves the delivery position.

5. A device according to Claim 3 or 4, characterised in that said means are formed of a double-acting cam (5) arranged on the input shaft (4) and a return shaft (6) articulated on the housing (3), controlling the movement of the oscillating body.

6. A metering device according to Claim 3 or 5, characterised in that the piston (2) emerges from the oscillating body (10) in delivery position, and in that the upper face (20) of the piston (2) has a suitable shape so that, taking into account the relative movement of the piston (2) with respect to the housing (3), it is scraped by the edge (320) of the housing (3).

7. A metering device according to one of Claims 1 to 6, characterised in that the force-feed member is essentially formed by a reservoir (70) which feeds the cylinder (1) by gravity, said reservoir having a circular bottom (71) beneath which a feed orifice (31) of the cylinder (1) appears, and being provided with said stirring means arranged at least in the vicinity of the bottom (71).

8. A metering device according to Claim 7, characterised in that the stirring means are formed by a disc (72) pierced by holes (73) of a diameter corresponding to that of the cylinder (1) and arranged on a circle having a radius such that they all pass in succession opposite the feed orifice (31), and by a flexible blade (74) mounted in fixed position in the reservoir (70) and provided with a head (75) arranged opposite the admission orifice (31) so as to deliver the material arranged in said holes (73) when each of them passes in front of the admission orifice (31).

9. A metering device according to Claim 8, characterised in that said head (75) presses with constant force in the direction of the cylinder (1).

10. A method for the continuous mixing of raw rubber, consisting of continuously introducing an elastomer into a mixing enclosure (8) and continuously incorporating precisely metered powdered products in said enclosure (8), characterised in that the metering of the powdered products is effected by at least one piston (2) sweeping a given swept volume and sliding in a cylinder (1) formed in a moveable body which moves in a housing (3) between an admission position in which the products to be metered fill said swept volume and a delivery position which is different from the admission position and in which the products to be metered are evacuated from said swept volume, said piston (2) being scraped by said housing (3) when it leaves the delivery position.

## Patentansprüche

1. Dosiervorrichtung für körnige oder pulverförmige Substanzen, mit wenigstens einem Kolben (2), der einen gegebenen Hubraum überstreicht und in einem Zylinder (1) gleitet, der in einem beweglichen Körper (10) gebildet ist, der sich in einem Rahmen (3) zwischen einer Einlaßposition, in der die zu dosierenden Substanzen den Hubraum füllen, und einer von der Einlaßposition verschiedenen Verdrängungsposition, in der die zu dosierenden Substanzen aus dem Hubraum ausgegeben werden, bewegt, wobei der Kolben (2) durch den Rahmen (3) abgeschabt wird, wenn er die Verdrängungsposition verläßt, welche Vorrichtung eine Stopfeinrichtung für die Substanzen umfaßt, die den Zylinder (1) in der Einlaßposition füllen, wobei die Stopfeinrichtung Rührmittel umfaßt, die eine immer gleiche Kompaktierung bewirken, unabhängig von den Beimengungsbedingungen der zu dosierenden Substanzen.

2. Vorrichtung nach Anspruch 1,
dadurch gekennzeichnet, daß
die Bewegungen des Kolbens und des beweglichen Körpers durch eine Eingangswelle (4) und zwei kinematische Ketten gesteuert werden, von denen eine ein Stange-Kurbel-System zum Steuern der Hin- und Herbewegung des Kolbens (2) umfaßt und die andere ein System mit doppeltwirkendem Nocken zum Steuern der Bewegung des beweglichen Körpers (10) umfaßt und beide kinematische Ketten aufeinander einwirken.

3. Dosiervorrichtung nach Anspruch 1 oder 2,
dadurch gekennzeichnet, daß:
a) der Körper (10) schwingt und drehbeweglich im Innern des Rahmens (3) montiert ist, wobei der Zylinder (1) einen Kreisbogen zwischen der Einlaßposition und der Verdrängungsposition beschreibt,
b) eine Eingangswelle (4) konzentrisch zur Bewegung des schwingenden Körpers (10) im Rahmen (3) angeordnet ist,
c) die Hin- und Herbewegung des Kolbens (2) durch die Eingangswelle (4) mit Hilfe eines Stange-Kurbel-Systems gesteuert wird,
d) die Bewegung des schwingenden Körpers (10) durch Mittel gesteuert wird, die die Bewegung des Kolbens (2) bezogen auf den schwingenden Körper (10) koordinieren.

4. Vorrichtung nach Anspruch 3,
dadurch gekennzeichnet, daß
besagte Mittel die Unbeweglichkeit des Kolbens (2) bezogen auf den schwingenden Körper (10) wenigstens sicherstellen, während der schwingende Körper (10) die Verdrängungsposition verläßt.

5. Vorrichtung nach Anspruch 3 oder 4,
dadurch gekennzeichnet, daß
besagte Mittel gebildet sind durch einen doppeltwirkenden Nocken (5), der auf der Eingangswelle (4) angeordnet ist, und eine an den Rahmen (3) angelenkte Rückholwelle (6), die die Bewegung des schwingenden Körpers steuern.

6. Dosiervorrichtung nach Anspruch 3 oder 5,
dadurch gekennzeichnet, daß
der Kolben (2) in Verdrängungsposition aus dem schwingenden Körper (10) austritt, und daß die Oberseite (20) des Kolbens (2) eine geeignete Form hat, um unter Berücksichtigung der Relativbewegung des Kolbens (2) gegen den Rahmen (3) von der Kante (320) des Rahmens (3) abgeschabt zu werden.

7. Dosiervorrichtung nach einem der Ansprüche 1 bis 6,
dadurch gekennzeichnet, daß
die Stopfeinrichtung im wesentlichen aus einem Reservoir (70) besteht, das den Zylinder (1) mittels Schwerkraft versorgt, wobei das Reservoir einen kreisförmigen Boden (71) hat, unter dem eine Einlaßöffnung (31) des Zylinders (1) liegt, und der mit besagten Rühreinrichtungen versehen ist, die wenigstens in der Nähe des Bodens (71) angeordnet sind.

8. Dosiervorrichtung nach Anspruch 7,
dadurch gekennzeichnet, daß
die Rühreinrichtungen gebildet sind durch eine Scheibe (72), die mit Löchern (73) durchbrochen ist, deren Durchmesser dem des Zylinders (1) entspricht, und die auf einem Kreis mit einem solchen Durchmesser angeordnet sind, daß sie nacheinander vor der Einlaßöffnung (31) vorbeiziehen, sowie ein flexibles Blatt (74), das fest im Reservoir (70) montiert ist und mit einem vor der Einlaßöffnung (31) angeordneten Kopf (75) versehen ist, um die in den Löchern (73) angeordnete Substanz auszutreiben, wenn ein jedes dieser Löcher vor der Einlaßöffnung (31) vorbeizieht.

9. Dosiervorrichtung nach Anspruch 8,
dadurch gekennzeichnet, daß
der Kopf (75) mit konstanter Kraft in Richtung des Zylinders (1) drückt.

10. Verfahren zum kontinuierlichen Mischen von Rohkautschuk, das darin besteht, kontinuierlich ein Elastomer in einen Mischbehälter (8) einzuführen und kontinuierlich in dem Behälter (8) genau dosierte pulverförmige Substanzen beizumengen,
**dadurch gekennzeichnet, daß** die Dosierung der pulverförmigen Substanzen durch wenigstens einen Kolben (2) durchgeführt wird, der einen gegebenen Hubraum überstreicht und in einem Zylinder (1) gleitet, der in einem beweglichen Körper gebildet ist, der sich in einem Rahmen (3) zwischen einer Einlaßposition, in der die zu dosierenden Substanzen den Zylinder füllen, und einer von der Einlaßposition verschiedenen Verdrängungsposition, in der die zu dosierenden Substanzen aus dem Hubraum ausgegeben werden, bewegt, wobei der Kolben (2) durch den Rahmen (3) abgeschabt wird, wenn er die Verdrängungsposition verläßt.
